# EUROPEAN PATENT APPLICATION

(11) **EP 0 635 201 A1**
(43) Date of publication of application: **25.01.1995**
(21) Application number: 94305275.3
(22) Date of filing: 19.07.1994
(51) Int. Cl.: A01G 9/02, A01G 31/02

(54) **Improvements in or relating to plant holders**

(30) Priority: 19.07.1993 GB 9314906
(71) Applicant: ANGLO AQUARIUM PLANT COMPANY LIMITED, Enfield, Middlesex EN2 9JE (GB)
(72) Inventor: Everett, David John, Enfield, Middlesex EN2 9JE (GB); Hildrick, John, Broxborne, Herts EN10 7AB (GB)
(74) Representative: Howick, Nicholas Keith

(57) **Abstract**

A tray (10) for holding pots for aquarium plant has a base (11), a containment portion for containing material for weighing down the tray and pot locators (13) with means for locating aquarium pots (30) such that their side walls are out of contact with the pot locators (13). In a preferred embodiment, the pots (30) engage the locators (13) with a bayonet fitting.

## Description

The invention relates to plant holders for use with aquarium plants, being plants which live in an aquarium or possibly in a pond, and which have their roots below water level.

There has been a practical difficulty in handling and displaying aquarium plants for sale, in that the plants, their roots and the growing medium in which the roots live have to be kept below water level.

One common solution to the problem has been to weigh down pots containing aquarium plants and growing medium by using lead weights. This solution is impractical because of the need for individual lead weighting of pots, and environmentally unattractive because of the use of lead.

An alternative solution for merchants of aquarium plants is to have a special aquarium constructed with retaining guides enabling polystyrene trays to be slid in and held below the water level. The polystyrene trays have holes formed in them and pots containing aquarium plants can be held in the trays by a friction fit. This solution is unattractive because the polystyrene trays have to be fitted in specially built guides, the use of a friction fit for the pots can result in damage to the plants (aquarium plant pots generally having perforated sides, and plants growing through the perforations), and the fact that the pot sides are at least partly surrounded by sold material will tend to affect plant development.

According to a first aspect of the invention, there is provided a tray for holding pots for aquarium plants, which tray has a base, a weight material containment portion for containing material for weighing down the tray, and a multiplicity of pot locators, which pot locators have pot locating means for locating aquarium plant pots at or adjacent the base of the pots such that the pots, in use, stand with their side walls above and out of contact with the pot locators.

According to a further aspect of the invention, there is provided a pot for an aquarium plant, which pot has a base, wall means extending upwardly from the base and engagement means on the base adapted to engage the pot locating means of a tray according to the invention.

According to a further aspect of the invention there is provided a tray in combination with at least one pot for aquarium plants, the tray having a base, a weight material containment portion containing material for weighing down the tray, and a multiplicity of pot locators, the pot having a pot base and wall means extending upwardly from the base, which pot locators have pot locating means and said pot or pots having engagement means at or adjacent said pot base engaging a respective one of said pot locating means, the engagement means of the or each pot being releasable from the associated pot locating means.

Preferably, the engagement means of one of the pots are movable into and out of engagement with the locating means of the pot locators by rotation of the pot relative to the locator.

The engagement means and the locating means preferably constitute a bayonet fitting. The engagement means preferably comprise a pair of radially outwardly extending members and the locating means preferably comprise an annular inwardly extending flange having at least a pair of cut out portions to allow the radially outwardly extending members to engage the flange. There may be four cut out portions.

The engagement means preferably extend from a cylindrical portion on the base of the pot, which cylindrical portion fits against the inner surface of the annular flange of the pot locator, whereby any plant growth is cut from the plant in the pot when the pot is engaged in the pot locator.

The tray preferably has side walls extending around the periphery of the base to define the weight material containing portion.

The pot locators are preferably at or above the height of the side walls relative to the base.

The tray is preferably a moulding of plastics material.

The pot or pots preferably have apertures in the wall means.

The tray may have twelve pot locators arranged in rows.

By way of example, one embodiment of a tray, and of a pot will now be described with reference to the accompanying drawings, in which:-
Figure 1 is a perspective view of a tray;
Figure 2 is a plan view of the tray of figure 1;
Figure 2A is an elevation of the tray of figure 2;
Figure 3 is a sectional view along the lines A-A in figure 2;
Figure 4 is a sectional view along the lines C-C in figure 2;
Figure 5 is an exploded detail of figure 4;
Figure 6 is a side view of a pot;
Figure 7 is a plan view of the pot of figure 6;
Figure 8 is an underneath plan view of the pot of figure 6; and
Figure 9 is a sectional view showing a pot engaged with a pot locator.

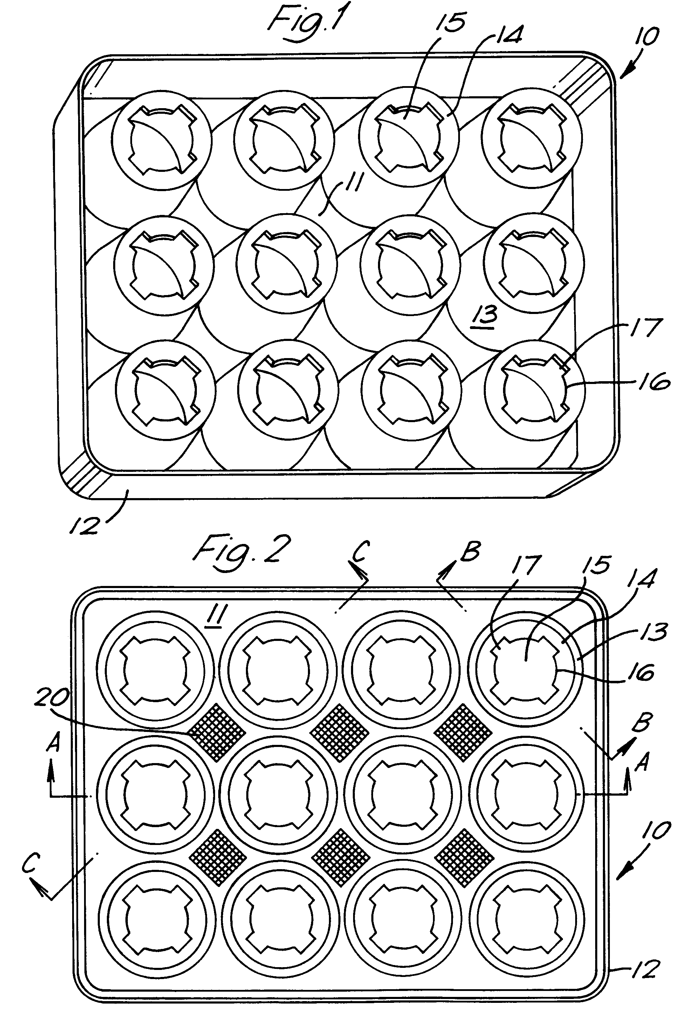

Figure 1 shows a tray 10 of moulded plastics material having a base 11 and side walls 12 extending around the periphery of the base 11.

Extending upwardly from the base 11 are pot locators 13, being frustoconical elements with a partly open top 14. The top 14 of each pot locator 13 has an opening 15 defined by an annular, inwardly extending flange 16 with four cut out portions 17 to give a somewhat cruciform appearance.

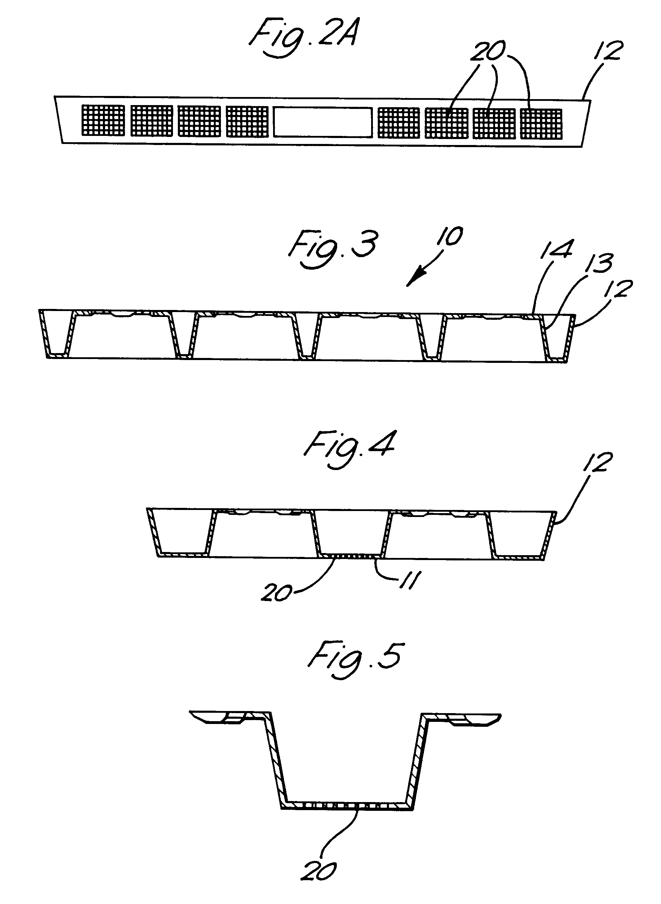

Fine mesh apertured portions 20 are moulded in the base 11 and side walls 12 (not shown in figure 1) to allow water to flow though. In use, the tray in filled with stones, gravel or the like to weigh it down and cause it to sink to the floor of an aquarium. The apertured portions 20 allow the tray to sink easily, and for water to drain out when the tray in removed from the aquarium. An apertured portion 20 is shown in greater detail in figure 5.

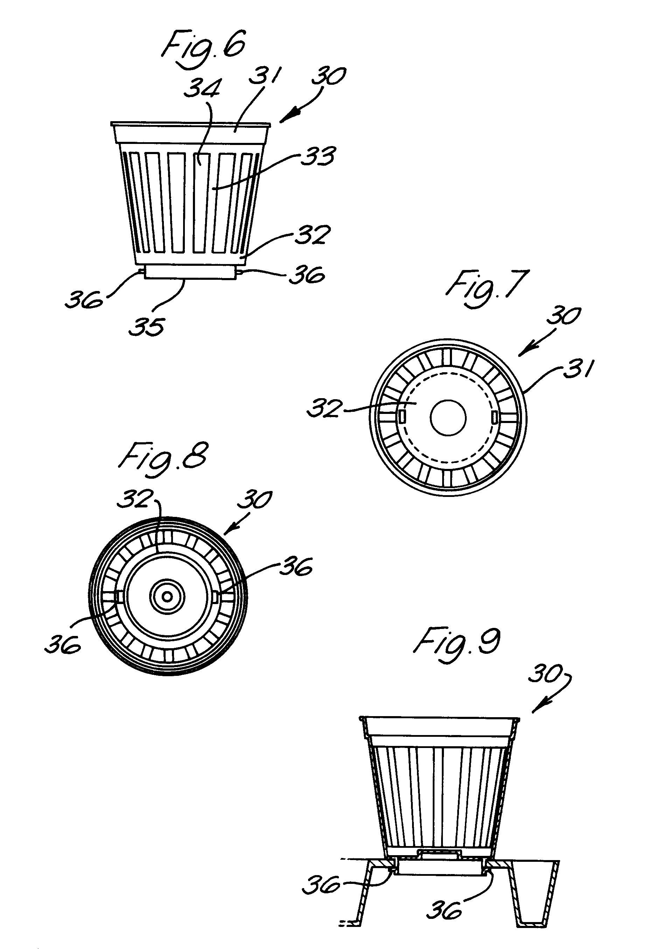

An aquarium pot 30 of plastics material is shown in figures 6, 7 and 8. The pot 30 is frustoconical in shape and has an upper rim 31 connected to a base 32 by ribs 33. This leaves elongate apertures 34 through which plants can grow.

Extending below the base 32 is a cylindrical portion 35 of a size to fit inside the annular flange 16 of the pot locator. Engagement portions in the form of lugs 36 extend radially outwardly from the cylindrical portion 35. This provides a bayonet arrangement, whereby the lugs can be located in cut out portions 17 of a pot locator, and with the cylindrical portion lying inside the annular flange 16. If the pot 30 is rotated, the lugs 36 engage under the flange 16 to hold the pot 30 to the tray. In doing so, any plant growth in the region of the base will be cast by the flange 16, to clear the pot base.

This embodiment of a tray and pot provides a convenient way of displaying and keeping aquarium plants weighed down. The plants are able to grow through the side walls of the pot without fear of damage, because the pot is held at its base only. The trays are easily transportable and do not require special aquarium fittings. The pots are easily removed and attached to the tray.

## Claims

1. A tray for holding pots for aquarium plants, which tray has a base, a weight material containment portion for containing material for weighing down the tray, and a multiplicity of pot locators, which pot locators have pot locating means for locating aquarium plant pots at or adjacent the base of the pots such that the pots, in use, stand with their side walls above and out of contact with the pot locators.

2. A tray as claimed in Claim 1 having side walls extending around the periphery of the base to define the weight material containing portion.

3. A tray as claimed in Claim 2 wherein the pot locators are at or above the height of the side walls relative to the base.

4. A tray as claimed in any one of Claims 1-3 wherein the locating means comprise an annular inwardly extending flange having at least a pair of cut-out portions to allow radially outwardly extending members to engage the flange.

5. A pot for an aquarium plant, which pot has a base, wall means extending upwardly from the base and engagement means on the base adapted to engage the pot locating means of a tray as claimed in any one of Claims 1-4.

6. A pot as claimed in Claim 5 which is movable into and out of engagement with the locating means of the pot locators by rotation of the pot relative to the locator.

7. A tray in combination with at least one pot for aquarium plants, the tray having a base, a weight material containment portion containing material for weighing down the tray, and a multiplicity of pot locators, the pot having a pot base and wall means extending upwardly from the base, which pot locators have pot locating means and said pot hole pots having engagement means at or adjacent said pot base engaging a respective one of said pot locating means, the engagement means of the or each pot being releasable from the associated pot locating means.

8. A pot and tray combination as claimed in Claim 7 wherein the engaging means of said pot are movable into and out of engagement with the locating means of the associated pot locator by rotation of the pot relative to the locator.

9. A pot and tray combination as claimed in Claim 7 or Claim wherein the engagement means and the locating means constitute a bayonet fitting.

10. A pot and tray combination as claimed in any one of Claims 7 to 9 wherein the engagement means extend from a cylindrical portion on the base of the pot, which cylindrical portion fits against the inner surface of the annular flange of the pot locator, whereby any plant growth is cut from the plant in the pot when the pot is engaged in the pot locator.
